# EUROPEAN PATENT SPECIFICATION

(11) **EP 4 012 977 B1**
(45) Date of publication and mention of the grant of the patent: **31.07.2024**
(21) Application number: 20213792.3
(22) Date of filing: 14.12.2020
(51) Int. Cl.: H04L 45/24, H04L 41/08, H04W 76/16

(54) **METHOD OF POLICY EXCHANGE FOR ATSSS OVERLAY AND SYSTEM**
VERFAHREN FÜR RICHTLINIENAUSTAUSCH FÜR ATSSS-OVERLAY UND SYSTEM
PROCÉDÉ D'ÉCHANGE DE POLITIQUE DE SUPERPOSITION ATSSS ET SYSTÈME

(43) Date of publication of application: 15.06.2022
(73) Proprietor: Deutsche Telekom AG, 53113 Bonn (DE)
(72) Inventor: AMEND, Markus, 63667 Nidda (DE); HAFEZ, Ahmed, 40591 Düsseldorf (DE)
(74) Representative: Vossius & Partner Patentanwälte Rechtsanwälte mbB

(56) References cited:
- TESSARES: "MPTCP: Opening the way for 5G Convergence", 22 September 2020 (2020-09-22), pages 1 - 11, XP055799037, Retrieved from the Internet <URL:https://www.tessares.net/new-white-paper-opening-the-way-to-5g-convergence-september-2020/> [retrieved on 20210427]
- PRAVEEN MULEY WIM HENDERICKX NOKIA GENG LIANG CHINA MOBILE HANS LIU D-LINK CORP LORIS CARDULLO JONATHAN NEWTON VODAFONE SUNGHOON S: "Network based Bonding solution for Hybrid Access; draft-muley-network-based-bonding-hybrid-access-03.txt", NETWORK BASED BONDING SOLUTION FOR HYBRID ACCESS; DRAFT-MULEY-NETWORK-BASED-BONDING-HYBRID-ACCESS-03.TXT; INTERNET-DRAFT: INTERNET AREA WG, INTERNET ENGINEERING TASK FORCE, IETF; STANDARDWORKINGDRAFT, INTERNET SOCIETY (ISOC) 4, RUE DES FALAISES CH- 1, no. 3, 22 October 2018 (2018-10-22), pages 1 - 18, XP015129474

## Description

### Field of the invention

This invention relates to a method of policy exchange for ATSSS Overlay and a system thereof.

### Background

Typically, Internet network operators provide one or several access like fixed (e.g. xDSL), Wi-Fi (e.g. public Hotspots) or cellular (e.g. 2G-5G) to customers. Even if those customers own user equipment (UE) like smartphones, which are potentially capable of connecting to multiple accesses simultaneously, they do not make use of this capability due to the lack of multi-connectivity technologies. For smartphones, this is the common simultaneous availability of Wi-Fi and cellular network, where applications are stuck to one access and unable to benefit from a second available access in terms of reliability and speed.

Network protocols which could leverage the potential of multiple accesses like Multipath Transmission Protocol (MPTCP), Multipath Quick UDP Internet Connection (MP-QUIC), Multipath Datagram Congestion Control Protocol (MPDCCP) and Stream Control Transmission Protocol (SCTP) are not widely adopted and require usually an end-to-end implementation. A broad and fast availability is therefore unrealistic.

Standardized multi-connectivity architectures like 3GPP Access Traffic Steering Switching Splitting (ATSSS) part of 3GPP Rel. 16 standardization TS 23.501, version 16.5.0, 09 July 2020, promise to provide remedy and use such protocols between a UE and a Mobile Network Operator MNO. Furthermore, these architectures give the operator(s) of such architectures a comprehensive traffic management capability.

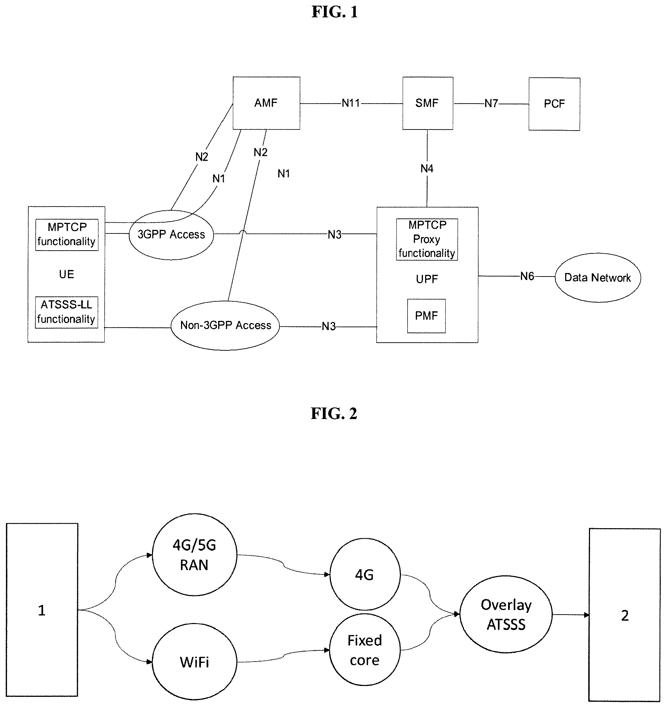

The ATSSS manages simultaneous connectivity for UEs over cellular (3GPP access) and non-cellular access (e.g. untrusted non-3GPP access - 3rd party Wi-Fi) and is depicted in FIG. 1.

FIG. 1 illustrates an exemplary ATSSS architecture as defined by the 3GPP TS 23.501. In FIG. 1, the ATSSS manages simultaneous connectivity for UEs over cellular (3GPP access) and non-cellular access (untrusted non-3GPP access, e.g. Wi-Fi). As shown in FIG. 1, the UE connects to a Data Network (DN) over cellular (3GPP Access) and Wi-Fi (Untrusted Non-3GPP access) using the N3 interface towards the ATSSS-UPF (User Plane Function) part of a 5G Core.

The UPF can be understood as the interface between the UE and the Data Network (e.g. the Internet) taking responsibility for traffic management. Other entities/functions forming part of the 5G Core as shown in FIG. 1 are: Access and Mobility Management Function (AMF), Session Management Function (SMF) and Policy Control Function (PCF). Further, FIG. 1 also shows the name of the interfaces that are exposed by each of these entities.

An important feature of the ATSSS architecture is the policy framework coming along, to exchange rules for traffic management leveraging the 5G control plane. In the 5G core, the PCF is responsible to provide the ATSSS related policies via the N4 interface to the ATSSS UPF or via NAS to the UE. The PCF controls:
- The Steering Mode that is used to steer/switch/split the detected Service Data Flow (SDF).
- The Steering Functionality that is used for the detected SDF, e.g. the MPTCP functionality or the ATSSS-LL functionality.
- Charging information depending on what Access Type is used for a detected SDF.
- Usage Monitoring information depending on what Access Type is used for a detected SDF.

Information around PCF that are more detailed can be found in 3GPP Rel. 16 standardization TS 23.501, version 16.5.0, 09 July 2020, Section 6.1.3.20.

Furthermore, according to 3GPP TS 23.501, the ATSSS requires a 5GC and cannot be integrated in a 4G core (EPC). Moreover, the ATSSS interworking between 4G and 5G is not supported due to the lack of proper Multiple Access Protocol Data Unit (MA PDU) handling. These limitations might lead to a delayed introduction of ATSSS.

The above limitations may be overcome by introducing a partial
integration of the ATSSS, as exemplary shown in FIG. 2 and referred in this document to as "ATSSS Overlay". The ATSSS Overlay differentiates from an ATSSS as defined by the 3GPP in that it provides multi-connectivity without an ATSSS user plane function.

FIG. 2 illustrates a User Equipment 1, UE, (supporting ATSSS capabilities) that is connected to a Data Network 2, DN, through a multipath. One path uses the 4G/5G Radio Access Network, RAN, whereas the other path uses WiFi / Fixed core. Both paths are connected to the ATSSS Overlay. The ATSSS Overlay is characterized by at least multipath support, with a new backend entity resembling on backend side the ATSSS UPF, while not requiring the same integration level.

In other words, that means that the backend component can also be located at a Mobile virtual network operator (MVNO), a multi-connectivity provider with or without own access resources, at a mobile network operator (MNO) with EPC, at a MNO without the coupling with fundamentals core components as e.g. SMF, AMF, PCF, at a fixed network operator (FNO), or in a public cloud environment.

Referring again to FIG. 2, the ATSSS Overlay provides an alternative to 3GPP TS 23.501, supporting similar user plane mechanisms. However, the ATSSS Overlay lacks support for the control plane in 3GPP TS 23.501 combined with the ATSSS policies exchange.

Tessares: "MPTCP: Opening the way for 5G Convergence", XP055799037, relates to 5G convergence and to an Overlay ATSSS based on the MPTCP proxy, that does not require all the core integration as ATSSS defined by the 3GPP. Praveen Muley et al: Network based bonding solution for Hybrid Access", XP015129474, relates to a network based bonding solution for Hybrid Access.

### Technical problem

An already established mechanism to exchange tariff- and subscription- based information between a MNO and an UE is the Entitlement Server disclosed in TS.43 Service Entitlement Configuration, Version 5.0, 03 April 2020. In this document, entitlements for Voice-over-Wi-Fi (VoWiFi), Voice-over-LTE (VoLTE), SMS over IP (SMSoIP) and On-Device Service Activation (ODSA), e.g. for eSIM are specified. Multiple authentication schemes in the mentioned document support identification of an UE and/or customer giving the opportunity to provide very dedicated entitlements and even policies.

However, currently there is not support for ATSSS Overlay by the Entitlement Server.

In view of the above, it is an object of the present invention to provide a policy entity for an ATSSS Overlay with a policy mechanism. Preferably, the policy entity provides an out-of-band policy mechanism, which is decoupled from the user plane provisioning.

Another object of the invention is to extend the Entitlement Server with support for ATSSS Overlay.

Another object of the invention is to define ATSSS Overlay specific rules/policies, such as: in a 5GC PCF or a EPC PCRF and/or in the Entitlement Server or in the interconnected BSS and/or in a new to defined entity residing in the core.

Another object of the invention is to provide requesting UEs with ATSSS Overlay specific rules/policies.

### Summary of the invention

The above objects are achieved by the features of the independent claims. The invention is specified by the independent claims. Preferred embodiments are defined in the dependent claims. Although the invention is only defined by the claims, the below embodiments, examples and aspects are present for aiding in understanding the background and advantages of the invention.

According to an aspect of the invention, there is provided a communication system as defined by independent claim 1.

In alternative words, the above-mentioned feature that the ATSSS Overlay provides multi-connectivity without an ATSSS user plane function means that the ATSSS Overlay is independent from a 3GPP defined ATSSS or independent from a 3GPP defined mobile core.

According to a preferred aspect, the policy entity is configured to communicate with the LTE and/or the multi-connectivity termination point using an out-of-band communication.

According to a preferred aspect, the policy entity for the ATSSS is configured to communicate ATSSS rules towards the policy entity for the ATSSS Overlay.

According to a preferred aspect, the mobile core is configured to inform the LTE of the availability of the ATSSS Overlay.

According to a preferred aspect, the policy entity for the ATSSS Overlay is an entitlement server.

According to another aspect of the invention, there is provided a method for exchanging policies by a policy entity within an Access Traffic Steering, Switching and Splitting, ATSSS, Overlay in a communication system as defined by independent claim 6.

In alternative words, the above-mentioned feature that the ATSSS Overlay provides multi-connectivity without an ATSSS user plane function means that the ATSSS Overlay is independent from a 3GPP defined ATSSS or independent from a 3GPP defined mobile core.

According to a preferred aspect, the policy entity communicates with the LTE and/or the multi-connectivity termination point using an out-of-band communication.

According to a preferred aspect, the policy entity for the ATSSS communicates ATSSS rules towards the policy entity for the ATSSS Overlay.

According to a preferred aspect, the mobile core informs the LTE of the availability of the ATSSS Overlay.

According to a preferred aspect, the policy entity for the ATSSS Overlay is an entitlement server.

Other aspects, features, and advantages will be apparent from the summary above, as well as from the description that follows, including the figures and the claims.

### Brief description of the drawings

In the drawings:
- FIG. 1: illustrates the principles of a 3GPP ATSSS architecture according to the prior art.
- FIG. 2: illustrates the principles of an ATSSS Overlay architecture according to the prior art.
- FIG. 3: illustrates an exemplary over-the-top ATSSS Overlay independent from network operators, according to an embodiment of the present invention.
- FIG. 4: illustrates an exemplary ATSSS Overlay with a MNO providing access, multipath traffic management and an Entitlement server, according to an embodiment of the present invention.

### Detailed description of the invention

The following description and figures assume a User Equipment (UE) such as, for example, a smartphone, or Residential Gateway (RG), equipped with Wi-Fi and cellular access interfaces or fixed such as DSL and cellular access interfaces. However, this can be transferred to any other multi-connectivity scenario with more or other accesses.

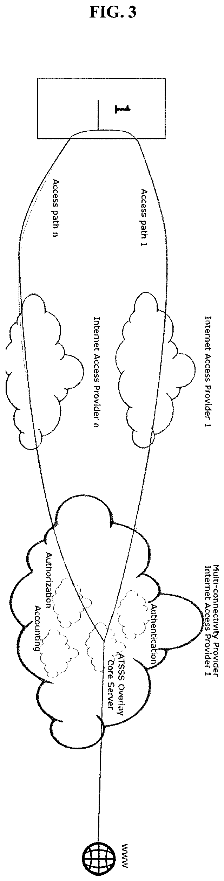

FIG. 3 illustrates an exemplary over-the-top ATSSS Overlay independent from network operators, according to an embodiment of the present invention. In that context, an ATSSS Overlay is provided from a multi-connectivity provider without assets in the access operator networks.

Alternatively, the ATSSS Overlay may be combined with a Mobile Network Operator MNO providing access and multipath traffic management.

The less integrated multi-connectivity network as shown in FIG. 3 is characterized by at least multipath support, with a new backend entity, also referred to in the following description as ATSSS Overlay Core Server, resembling on backend side the ATSSS UPF, while not requiring the same integration level. In particular that means that the new backend component can also be located at a Mobile virtual network operator (MVNO), a multi-connectivity provider with or without own access resources, at a mobile network operator (MNO) with EPC, at a MNO without the coupling with fundamentals core components as e.g. SMF, AMF, PCF, at a fixed network operator (FNO), or in a public cloud environment.

Preferably, the new backend entity is compared to the ATSSS UPF, a lightweight implementation with only some of the functionalities or different functionalities. Multipath protocols supported might be similar to ATSSS UPF MPTCP or others like MP-DCCP, MP-QUIC, QUIC, SCTP.

In any case, partial integration of the ATSSS, hereinafter referred to as ATSSS Overlay, it is not required that all accesses are owned by the multi-connectivity provider.

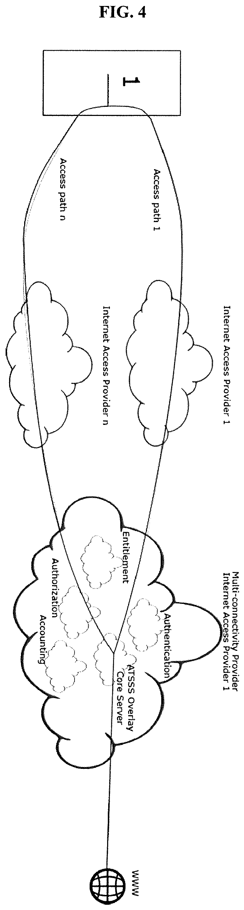

FIG. 4 illustrates an exemplary ATSSS Overlay with a Mobile Network Operator (MNO) providing access, multipath traffic management and an Entitlement server, according to an embodiment of the present invention.

Some possible ATSSS Overlay specific rules/policies provided by the policy entity due to subscription information may comprise: 1) general: Enabled/Disabled ATSSS Overlay; 2) ATSSS Overlay Core Server: IP address (:Port)/FQDN; 3) ATSSS Overlay Traffic management rule: Steering/Switching/Splitting; 4) ATSSS Overlay coverage: Application (e.g. Name), Destination (IP address/Port/AS), Locality (Coordinates, connected base station, ...), Network protocol (e.g. TCP/UDP), Environment (CAMPUS/Public/Roaming).

The ATSSS Overlay coverage means that is either applied to any traffic or selected traffic given by the ATSSS Overlay policies.

The rules in 1) - 4) can be combined arbitrarily and provided as a set of rules. The detection of the policy entity follows the rules according to TS.43 Service Entitlement Configuration, Version 5.0, 03 April 2020, Chapter 2. The client, i.e. the UE, may follow a discovery procedure to obtain the address of the entitlement configuration server, with a resulting FQDN based on the following format: aes.mnc<MNC>.mcc<MCC>.pub.3gppnetwork.org.

The UE is configured to implement a method to interpret the ATSSS related policies played out by the policy entity.

Leveraging existing functions in the 4G core and/or the 5G core related to the policy frameworks PCRF/PCF, allow the definition of ATSSS rules (partially) maintained in these entities. This also facilitates the compatibility with the fully fledged ATSSS from 3GPP Technical Specification: 23.501, Version 16.5.0, 09 July 2020.

In that case this invention further claims the exchange of information from/to PC(R)F to/from the policy entity. This is in particular useful if ATSSS and ATSSS-Overlay co-exists. In this case it may be beneficial to maintain the ATSSS related policies or a subset of them at one location instead of maintaining them on different locations (PC(R)F and policy entity). Linking the different policy entities allows to specify policies at one of them and replicate them to the other.

In case the policies have to be provided from a new defined core entity which are not defined yet like PC(R)F or policy entity, it becomes crucial that the UE becomes aware of the policy entity. 3GPP responsible for 4G core and 5GC as well as GSMA specifying the Entitlement Server have established processes, e.g. [4] TS.43 Service Entitlement Configuration, Version 5.0, 03 April 2020, Chapter 2. At least the latter proposes a simple approach being available under a specified Fully Qualified Domain Name (FQDN) which can be verified by an UE. Preferably the same approach can be adopted by the policy entity (which in some cases may be the same as the Entitlement Server). Another mechanism uses the existing policy framework (e.g. PC(R)F) of a MNO and the connected UEs to communicate the existence of the policy entity.

According to an embodiment, another approach could be the usage of (hidden) SMS to announce the availability from the network.

The reason for a new defined policy entity, possibly dedicated to the task for the out-of-band ATSSS Overlay policy exchange, may be much simpler and with less complexity compared to the PC(R)F or Entitlement Server. This is because PC(R)F and Entitlement Servers are relatively complex and oversized when only some ATSSS overly policies are required. That might become crucial for small/limited networks like CAMPUS/Enterprise.

While the invention has been illustrated and described in detail in the drawings and foregoing description, such illustration and description are to be considered illustrative or exemplary and not restrictive. It will be understood that changes and modifications may be made by those of ordinary skill as long as they do not depart from the scope of the invention as it is depicted by the appended claims.

Furthermore, in the claims the word "comprising" does not exclude other elements or steps, and the indefinite article "a" or "an" does not exclude a plurality. A single unit may fulfill the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

## Claims

1. A communication system for exchanging policies comprising a policy entity for an Access Traffic Steering, Switching and Splitting, ATSSS, Overlay, a mobile core, a User Equipment, UE, (1), and a multi-connectivity provider having a multi-connectivity termination point, wherein the ATSSS Overlay is configured to provide multi-connectivity without an ATSSS user plane function,
**characterized in that**
the ATSSS Overlay is an ATSSS as defined by the 3GPP differentiate from the fact that it has at least multipath support, with a backend entity, a ATSSS Overlay Core Server, that replaces the ATSSS user plane function, resembling on backend side the ATSSS UPF,
the backend entity being located at:
a Mobile virtual network operator, MVNO;
a multi-connectivity provider with or without own access resources;
a mobile network operator, MNO, with EPC;
a MNO without the coupling with fundamentals core components such as Session Management Function, SMF, Access and Mobility Management Function, AMF, and Policy Control Function, PCF;
a fixed network operator, FNO; or
a public cloud environment,
the policy entity is configured to communicate ATSSS Overlay specific rules with the UE (1) and/or to the multi-connectivity termination point, and
the ATSSS Overlay specific rules comprise one or more of the following parameters:
an indication whether the ATSSS Overlay is enabled or disabled;
information regarding the ATSSS Overlay Core Server comprising IP address, port number, and/or Fully Qualified Domain Name, FQDN;
ATSSS Overlay Traffic management rules for steering, switching and splitting;
ATSSS Overlay coverage information comprising application information, destination address information, locality information, network protocol information, environment information.

2. The communication system of claim 1, wherein the policy entity is configured to communicate with the LTE (1) and/or the multi-connectivity termination point using an out-of-band communication.

3. The communication system of any of the preceding claims, wherein the system further comprises a policy entity for ATSSS as defined by the 3GPP, so that the policy entity for the ATSSS Overlay co-exists in the communication system with the policy entity for the ATSSS as defined by the 3 GPP.

4. The communication system of claim 3, wherein the policy entity for the ATSSS Overlay is further configured to communicate ATSSS Overlay specific rules towards the policy entity for the ATSSS.

5. The communication system of claim 3, wherein the policy entity for the ATSSS is configured to communicate ATSSS rules towards the ATSSS Overlay policy entity.

6. The communication system of any one of claims 3 to 5, wherein the mobile core is configured to inform the UE (1) of the availability of the ATSSS Overlay.

7. The communication system of any one of claims 1 to 6, wherein the policy entity for the ATSSS Overlay is an entitlement server.

8. A method for exchanging policies by a policy entity within an Access Traffic Steering, Switching and Splitting, ATSSS, Overlay in a communication system, the communication system comprising a mobile core, a User Equipment, LTE, and a multi-connectivity provider having a multi-connectivity termination point, wherein the ATSSS Overlay provides multi-connectivity without an ATSSS user plane function,
wherein the ATSSS Overlay is an ATSSS as defined by the 3GPP differentiate from the fact that it has at least multipath support, with a backend entity, a ATSSS Overlay Core Server, that replaces the ATSSS user plane function, resembling on backend side the ATSSS UPF,
the backend entity being located at:
a Mobile virtual network operator, MVNO;
a multi-connectivity provider with or without own access resources;
a mobile network operator, MNO, with EPC;
a MNO without the coupling with fundamentals core components such as Session Management Function, SMF, Access and Mobility Management Function, AMF, and Policy Control Function, PCF;
a fixed network operator, FNO; or
a public cloud environment,
the method **characterized by** comprising:
communicating, from the policy entity, ATSSS Overlay specific rules to the LTE and/or to the multi-connectivity termination point,
wherein the ATSSS Overlay specific rules comprise one or more of the following parameters:
an indication whether the ATSSS Overlay is enabled or disabled;
information regarding an ATSSS Overlay Core Server comprising IP address, port number, and/or Fully Qualified Domain Name, FQDN;
ATSSS Overlay Traffic management rules for steering, switching and splitting;
ATSSS Overlay coverage information comprising application information, destination address information, locality information, network protocol information, environment information.

9. The method of claim 8, wherein the policy entity communicates with the UE and/or the multi-connectivity termination point using an out-of-band communication.

10. The method of claim 8 or 9, wherein the system further comprises a policy entity for ATSSS as defined by the 3GPP, so that the policy entity for the ATSSS Overlay co-exists in the communication system with the policy entity for the ATSSS as defined by the 3GPP.

11. The method of claim 10, wherein the policy entity for the ATSSS Overlay communicates ATSSS Overlay specific rules towards the policy entity for the ATSSS, and/or wherein the policy entity for the ATSSS communicates ATSSS rules towards the policy entity for the ATSSS Overlay.

12. The method of claim any one of claims 8 to 11, wherein the mobile core informs the LTE of the availability of the ATSSS Overlay.

13. The method of any one of claims 8 to 12, wherein the policy entity for the ATSSS Overlay is an entitlement server.

## Patentansprüche

1. Kommunikationssystem zum Austausch von Richtlinien, umfassend eine Richtlinienentität für ein Overlay zur Zugriffsverkehrslenkung, -vermittlung und - aufteilung, ATSSS, einen mobilen Kern, eine Benutzereinrichtung, UE, (1) und einen Multi-Konnektivitäts-Anbieter mit einem Multi-Konnektivitäts-Abschlusspunkt, wobei das ATSSS-Overlay so konfiguriert ist, dass es Multi-Konnektivität ohne eine ATSSS-Benutzerebenenfunktion (UPF) bereitstellt,
**dadurch gekennzeichnet, dass**
das ATSSS-Overlay ein ATSSS gemäß der 3GPP-Definition ist, mit dem Unterschied, dass es zumindest Mehrwegunterstützung bietet, mit einer Backend-Entität, einem ATSSS-Overlay-Kernserver, der die ATSSS-Benutzerebenenfunktion ersetzt und auf der Backend-Seite der ATSSS-UPF ähnelt,
wobei die Backend-Entität vorgesehen ist bei:
einem virtuellen Mobilfunkanbieter, MVNO;
einem Multi-Konnektivitäts-Anbieter mit oder ohne eigene Zugangsressourcen;
einem Mobilfunkanbieter, MNO, mit EPC;
einem MNO ohne Kopplung mit grundlegenden Kernkomponenten wie Sitzungsmanagementfunktion, SMF, Zugriffs- und Mobilitätsverwaltungsfunktion, AMF, und Richtlinienkontrollfunktion, PCF;
einem Festnetzanbieter (FNO); oder
einer öffentlichen Cloud-Umgebung,
wobei die Richtlinienentität so konfiguriert ist, dass sie ATSSS-Overlay-spezifische Regeln mit der UE (1) und/oder an den Multi-Konnektivitäts-Abschlusspunkt kommuniziert, und
wobei die ATSSS-Overlay-spezifischen Regeln einen oder mehrere der folgenden Parameter umfassen:
eine Angabe, ob das ATSSS-Overlay aktiviert oder deaktiviert ist;
Informationen über einen ATSSS-Overlay-Kernserver mit IP-Adresse, Portnummer und/oder Fully Qualified Domain Name, FQDN;
ATSSS-Overlay-Verkehrsmanagementregeln für Lenkung, Vermittlung und Aufteilung;
ATSSS-Overlay-Abdeckungsinformationen, die Anwendungsinformationen, Zieladressinformationen, Lokalitätsinformationen, Netzprotokollinformationen und Umgebungsinformationen umfassen.

2. Kommunikationssystem nach Anspruch 1, wobei die Richtlinienentität so konfiguriert ist, dass sie mit der UE (1) und/oder dem Multi-Konnektivitäts-Abschlusspunkt unter Verwendung einer Out-of-Band-Kommunikation kommuniziert.

3. Kommunikationssystem nach einem der vorhergehenden Ansprüche, wobei das System ferner eine Richtlinienentität für ATSSS gemäß der 3GPP-Definition umfasst, so dass die Richtlinienentität für das ATSSS-Overlay in dem Kommunikationssystem neben der Richtlinienentität für das ATSSS gemäß der 3GPP-Definition besteht.

4. Kommunikationssystem nach Anspruch 3, wobei die Richtlinienentität für das ATSSS-Overlay ferner so konfiguriert ist, dass sie ATSSS-Overlay-spezifische Regeln an die Richtlinienentität für das ATSSS übermittelt.

5. Kommunikationssystem nach Anspruch 3, wobei die Richtlinienentität für das ATSSS so konfiguriert ist, dass sie ATSSS-Regeln an die ATSSS-Overlay-Richtlinienentität übermittelt.

6. Kommunikationssystem nach einem der Ansprüche 3 bis 5, wobei der mobile Kern so konfiguriert ist, dass er die UE (1) über die Verfügbarkeit des ATSSS Overlay informiert.

7. Kommunikationssystem nach einem der Ansprüche 1 bis 6, wobei die Richtlinienentität für das ATSSS-Overlay ein Entitlement-Server ist.

8. Verfahren zum Austausch von Richtlinien durch eine Richtlinienentität innerhalb eines Overlays zur Zugriffsverkehrslenkung, -vermittlung und -aufteilung, ATSSS, in einem Kommunikationssystem, wobei das Kommunikationssystem einen mobilen Kern, eine Benutzereinrichtung, UE, und einen Multi-Konnektivitäts-Anbieter mit einem Multi-Konnektivitäts-Abschlusspunkt umfasst, wobei das ATSSS-Overlay eine Multi-Konnektivität ohne eine ATSSS-Benutzerebenenfunktion (UPF) bereitstellt,
wobei das ATSSS-Overlay ein ATSSS gemäß der 3GPP-Definition ist, mit dem Unterschied, dass es zumindest Mehrwegeunterstützung bietet, mit einer Backend-Entität, einem ATSSS-Overlay-Kernserver, der die ATSSS-Benutzerebenenfunktion ersetzt und auf der Backend-Seite der ATSSS-UPF ähnelt,
wobei die Backend-Entität vorgesehen ist bei:
einem virtuellen Mobilfunkanbieter, MVNO;
einem Multi-Konnektivitäts-Anbieter mit oder ohne eigene Zugangsressourcen;
einem Mobilfunkanbieter, MNO, mit EPC;
einem MNO ohne Kopplung mit grundlegenden Kernkomponenten wie Sitzungsmanagementfunktion, SMF, Zugriffs- und Mobilitätsverwaltungsfunktion, AMF, und Richtlinienkontrollfunktion, PCF;
einem Festnetzanbieter (FNO); oder
einer öffentlichen Cloud-Umgebung,
wobei das Verfahren **dadurch gekennzeichnet ist, dass** es umfasst:
Übermitteln von ATSSS-Overlay-spezifischen Regeln von der Richtlinienentität an die UE und/oder an den Multi-Konnektivitäts-Abschlusspunkt,
wobei die ATSSS-Overlay-spezifischen Regeln einen oder mehrere der folgenden Parameter umfassen:
eine Angabe, ob das ATSSS-Overlay aktiviert oder deaktiviert ist;
Informationen über einen ATSSS-Overlay-Kernserver mit IP-Adresse, Portnummer und/oder Fully Qualified Domain Name, FQDN;
ATSSS-Overlay-Verkehrsmanagementregeln für Lenkung, Vermittlung und Aufteilung;
ATSSS-Overlay-Abdeckungsinformationen, die Anwendungsinformationen, Zieladressinformationen, Lokalitätsinformationen, Netzprotokollinformationen und Umgebungsinformationen umfassen.

9. Verfahren nach Anspruch 8, wobei die Richtlinienentität mit der UE und/oder dem Multi-Konnektivitäts-Abschlusspunkt unter Verwendung einer Out-of-Band-Kommunikation kommuniziert.

10. Verfahren nach Anspruch 8 oder 9, wobei das System ferner eine Richtlinienentität für ATSSS gemäß der 3GPP-Definition umfasst, so dass die Richtlinienentität für das ATSSS-Overlay in dem Kommunikationssystem neben der Richtlinienentität für das ATSSS gemäß der 3GPP-Definition besteht.

11. Verfahren nach Anspruch 10, wobei die Richtlinienentität für das ATSSS-Overlay ATSSS-Overlay-spezifische Regeln an die Richtlinienentität für das ATSSS übermittelt, und/oder
wobei die Richtlinienentität für das ATSSS ATSSS-Regeln an die Richtlinienentität für das ATSSS-Overlay übermittelt.

12. Verfahren nach einem der Ansprüche 8 bis 11, wobei der mobile Kern die UE über die Verfügbarkeit des ATSSS-Overlay informiert.

13. Verfahren nach einem der Ansprüche 8 bis 12, wobei die Richtlinienentität für das ATSSS-Overlay ein Entitlement-Server ist.

## Revendications

1. Système de communication d'échange de politiques comprenant une entité de politiques pour un recouvrement d'ATSSS [commutation et division de trafic d'accès], un coeur mobile, un équipement utilisateur UE (1), et un fournisseur de multi-connectivité présentant un point de terminaison de multi-connectivité, dans lequel le recouvrement d'ATSSS est configuré pour fournir la multi-connectivité sans fonction de plan utilisateur ATSSS,
**caractérisé en ce que**
le recouvrement d'ATSSS se différencie d'un ATSSS tel que défini par le 3GPP **en ce qu'**il présente au moins un support à trajets multiples avec une entité dorsale, un serveur central de recouvrement d'ATSSS, qui remplace la fonction de plan utilisateur ATSSS, ressemblant sur le côté dorsal à l'UPF ATSSS,
l'entité dorsale étant située sur :
un MVNO [opérateur de réseau mobile virtuel] ;
un fournisseur de multi-connectivité avec ou sans ressources d'accès propres ;
un MNO [opérateur de réseau mobile] avec EPC ;
un MNO sans le couplage à des composants de coeur fondamentaux par exemple une SMF [fonction de gestion de session], une AMF [fonction de gestion d'accès et de mobilité], une PCF [fonction de commande de politique] ;
un FNO [opérateur de réseau fixe] ; ou
un environnement de nuage public,
l'entité de politique est configurée pour communiquer des règles spécifiques au recouvrement d'ATSSS à l'UE (1) et/ou au point de terminaison de multi-connectivité, et
les règles spécifiques au recouvrement d'ATSSS comprennent un ou plusieurs des paramètres suivants :
une indication pour savoir si le recouvrement d'ATSSS est activé ou désactivé ;
des informations concernant un serveur central de recouvrement d'ATSSS comprenant une adresse IP, un numéro de port et/ou un FQDN [nom de domaine pleinement qualifié] ;
des règles de gestion de trafic de recouvrement d'ATSSS pour diriger, commuter et diviser ;
des informations de couverture de recouvrement d'ATSSS comprenant des informations d'application, des informations d'adresse de destination, des informations de localité, des informations de protocole de réseau, des informations d'environnement.

2. Système de communication selon la revendication 1, dans lequel l'entité de politiques est configurée pour communiquer avec l'UE (1) et/ou le point de terminaison de multi-connectivité en utilisant une communication hors bande.

3. Système de communication selon l'une quelconque des revendications précédentes, dans lequel le système comprend en outre une entité de politiques pour un ATSSS tel que défini par le 3GPP de telle sorte que l'entité de politiques pour le recouvrement d'ATSSS co-existe dans le système de communication avec l'entité de politiques pour l'ATSSS tel que défini par le 3GPP.

4. Système de communication selon la revendication 3, dans lequel l'entité de politiques pour le recouvrement d'ATSSS est configurée en outre pour communiquer des règles spécifiques au recouvrement d'ATSSS à l'entité de politiques pour l'ATSSS.

5. Système de communication selon la revendication 3, dans lequel l'entité de politiques pour l'ATSSS est configurée pour communiquer des règles d'ATSSS à l'entité de politiques de recouvrement d'ATSSS.

6. Système de communication selon l'une quelconque des revendications 3 à 5, dans lequel le coeur mobile est configuré pour informer l'UE (1) de la disponibilité du recouvrement d'ATSSS.

7. Système de communication selon l'une quelconque des revendications 1 à 6, dans lequel l'entité de politiques pour le recouvrement d'ATSSS est un serveur d'autorisation.

8. Procédé d'échange de politiques par une entité de politiques au sein d'un recouvrement d'ATSSS dans un système de communication, le système de communication comprenant un coeur mobile, un équipement utilisateur UE, et un fournisseur de multi-connectivité présentant un point de terminaison de multi-connectivité, dans lequel le recouvrement d'ATSSS fournit une multi-connectivité sans fonction de plan utilisateur d'ATSSS,
dans lequel le recouvrement d'ATSSS se différencie d'un ATSSS tel que défini par le 3GPP en ce qu'il présente au moins un support à trajets multiples avec une entité dorsale, un serveur central de recouvrement d'ATSSS, qui remplace la fonction de plan utilisateur ATSSS, ressemblant sur le côté dorsal à l'UPF ATSSS,
l'entité dorsale étant située sur :
un MVNO [opérateur de réseau mobile virtuel] ;
un fournisseur de multi-connectivité avec ou sans ressources d'accès propres ;
un MNO [opérateur de réseau mobile] avec EPC ;
un MNO sans le couplage à des composants de coeur fondamentaux par exemple une SMF [fonction de gestion de session], une AMF [fonction de gestion d'accès et de mobilité], une PCF [fonction de commande de politique] ;
un FNO [opérateur de réseau fixe] ; ou
un environnement de nuage public,
**caractérisé en ce que** le procédé comprend :
la communication, à partir de l'entité de politiques, de règles spécifiques au recouvrement d'ATSSS à l'UE et/ou au point de terminaison de multi-connectivité,
dans lequel les règles spécifiques au recouvrement d'ATSSS comprennent un ou plusieurs des paramètres suivants :
une indication pour savoir si le recouvrement d'ATSSS est activé ou désactivé ;
des informations concernant un serveur central de recouvrement d'ATSSS comprenant une adresse IP, un numéro de port et/ou un FQDN [nom de domaine pleinement qualifié] ;
des règles de gestion de trafic de recouvrement d'ATSSS pour diriger, commuter et diviser ;
des informations de couverture de recouvrement d'ATSSS comprenant des informations d'application, des informations d'adresse de destination, des informations de localité, des informations de protocole de réseau, des informations d'environnement.

9. Procédé selon la revendication 8, dans lequel l'entité de politiques communique avec l'UE et/ou avec le point de terminaison de multi-connectivité en utilisant une communication hors bande.

10. Procédé selon la revendication 8 ou 9, dans lequel le système comprend en outre une entité de politiques pour l'ATSSS tel que défini par le 3GPP de telle sorte que l'entité de politiques du recouvrement d'ATSSS co-existe dans le système de communication avec l'entité de politiques pour l'ATSSS tel que défini par le 3GPP.

11. Procédé selon la revendication 10, dans lequel l'entité de politiques pour le recouvrement d'ATSSS communique des règles spécifiques au recouvrement d'ATSSS à l'entité de politiques pour l'ATSSS, et/ou dans lequel l'entité de politiques pour l'ATSSS communique des règles d'ATSSS à l'entité de politiques pour le recouvrement d'ATSSS.

12. Procédé selon l'une quelconque des revendications 8 à 11, dans lequel le coeur mobile informe l'UE de la disponibilité du recouvrement d'ATSSS.

13. Procédé selon l'une quelconque des revendications 8 à 12, dans lequel l'entité de politiques pour le recouvrement d'ATSSS est un serveur d'autorisation.
